# EUROPEAN PATENT APPLICATION

(11) **EP 2 372 818 A1**
(43) Date of publication of application: **05.10.2011**
(21) Application number: 11159594.8
(22) Date of filing: 24.03.2011
(51) Int. Cl.: H01M 4/38, H01M 4/42, H01M 10/0525, H01M 4/587

(54) **Non-aqueous electrolyte secondary battery and fabrication method for non-aqueous electrolyte secondary battery**

(30) Priority: 26.03.2010 JP 2010071408; 24.09.2010 JP 2010212980; 13.01.2011 JP 2011004565
(71) Applicant: Sanyo Electric Co., Ltd., Osaka 570-8677 (JP)
(72) Inventor: Takahashi, Yasufumi, Moriguchi-shi Osaka 5708677 (JP); Fujimoto, Masahisa, Moriguchi-shi Osaka 5708677 (JP)
(74) Representative: Glawe, Delfs, Moll

(57) **Abstract**

A non-aqueous electrolyte secondary battery according to the present invention has a positive electrode comprising a positive electrode active material, a negative electrode comprising a negative electrode active material and a non-aqueous electrolyte, wherein a mixture of at least one metal selected from zinc and cadmium having an average particle diameter in a range of from 0.25 µm to 100 µm and carbon is used as the negative electrode active material.

## Description

### RELATED APPLICATIONS

The priority application Number Japanese Patent Applications 2010-71408, 2010-212980 and 2011-4565 upon which this application is based is hereby incorporated by reference.

### BACKGROUND OF THE INVENTION

### Field of the Invention

The present invention relates to a non-aqueous electrolyte secondary battery and a fabrication method thereof, the non-aqueous electrolyte secondary battery provided with a positive electrode comprising a positive electrode active material, a negative electrode comprising a negative electrode active material, and a non-aqueous electrolyte. More particularly, a feature of the invention is to improve the negative electrode active material used in the negative electrode so that a non-aqueous electrolyte secondary battery with high capacity, high energy density and excellent charge/discharge cycle characteristics is obtained.

### Description of the Related Art

Recently, a non-aqueous electrolyte secondary battery which is adapted for charging and discharging by way of transfer of lithium ion between a positive electrode and a negative electrode has widely been used as a power supply for mobile electric device.

In recent years, reduction in size and weight of mobile phone, note book PC and PDA has been remarkably advanced, and electric power consumption tends to rise more steadily by advancement of multifunction. As a result, demands for further higher capacity and higher energy density in a non-aqueous electrolyte secondary battery used as a power supply for mobile phone, notebook computer and PDA have been increasing.

Generally, as the positive electrode active material of positive electrode in such a non-aqueous electrolyte secondary battery, lithium cobalt oxide LiCoO₂, lithium manganese oxide LiMn₂O₄ having a spinel structure, lithium composite oxide of cobalt-nickel-manganese, lithium composite oxide of aluminum-nickel-manganese, lithium composite oxide of aluminum-nickel-cobalt, and the like have been widely known. As the negative electrode active material of negative electrode, lithium metal, carbon such as graphite, and a material such as Si and Sn to be alloyed with lithium (See reference document 1 (Journal of Electrochemical Society 150 (2003) A679)) have been widely known.

However, lithium metal is difficult to handle, and in a case where a negative electrode active material of lithium metal is used, dendrite of acicular lithium metal appears and internal short-circuiting occurs between the positive electrode, which causes problems in battery life and safety.

In a case where carbon is used for a negative electrode active material, dendrite is not generated. Particularly, in a case where graphite is used, the following advantages are obtained. Both of chemical durability and structural stability are excellent, a capacityper unit mass is high, reversibility with storage and release of lithium is improved, working potential is low and excellent in planarity. Therefore, the negative electrode active material of graphite has been widely used as the power supply for mobile device.

However, since a theoretical capacity of intercalation compound LiC₆ of graphite is 372 mAh/g, the use of graphite does not sufficiently meet the demands for higher capacity and higher energy density.

Therefore, in order to attain high capacity and high energy density by using graphite, a non-aqueous electrolyte secondary battery wherein negative electrode composite slurry comprising graphite having scale-shaped primary particle is strongly compressed to a current collector has been used for the purpose of improving the filling density of the negative electrode composite slurry and increasing volumetric capacitance.

However, when the negative electrode composite slurry comprising graphite is strongly compressed to the negative electrode current collector for improvement of filling density, graphite having scale-shaped primary particle is extremely orientated. As a result, ion diffusing speed is reduced, so that discharge capacity is decreased. Furthermore, working potential at discharging is raised causing lowering of energy density.

In order to solve the above-mentioned problems, the use of Si, Sn or an alloy containing Si and Sn as a negative electrode active material having high capacity density and high energy density at a mass ratio has been proposed (see the above reference document 1). These materials show high specific capacity per unit mass, for example, Si shows 4198 mAh/g, and Sn shows 993 mAh/g. However, these materials have higher working potential during discharging as compared with a graphite electrode, and expansion and contraction of volume at charging and discharging occurs, so that cycle characteristics tend to decrease.

On the other hand, as an element forming an alloy with lithium, for example, carbon, tin, silicon, magnesium, aluminum, calcium, zinc, cadmium and silver have been widely known. Particularly, an aqueous battery such as a manganese dry cell using zinc and a nickel cadmium battery using cadmium as its negative electrode active material has already been practically used.

However, zinc and cadmium have not practically used as an active material of lithium ion battery which is lightweight and having a large energy density per unit mass. Namely, zinc and cadmium have not practically used as an active material of non-aqueous electrolyte secondary battery. The reasons thereof are as follows: (1) Zinc and cadmium have higher ionization tendency than hydrogen and are easy to react with moisture of atmosphere and unstable, (2) a true specific gravity of zinc is 7.13 g/cm³ and the true specific gravity of cadmium is 8.65 g/cm³, which are much larger than each true specific gravity of carbon of 2.25 g/cm³ and silicon of 2.33 g/cm³, and (3) As to theoretical capacity density per unit mass, 410 mAh/g of zinc and is smaller than 4198 mAh/g of silicon and 993 mAh/g of tin.

It has been proposed to use a negative electrode material containing a carbonaceous material, a graphite material and at least one of fine nano-metallic particles selected from Ag, Zn, Al, Ga, In, Si, Ge, Sn and Pb with average particle diameter of not smaller than 10 nm and not larger than 200 nm (See, for example, Patent document 1, JP-A 2004-213927).

The patent document 1 discloses that the use of fine nano-metallic particle having small average particle size contributes to restrict pulverization of particle resulting from expansion and contraction thereof by charging/discharging, and a cycle property is improved.

However, problems in using the above-described negative electrode active material have been that it is difficult to produce nano-metallic particle having small particle average size and it is impossible to conduct charging and discharging suitably because of working potential difference between graphite and Si contained in nano-metallic particle. Further, even if the particle is fine, further pulverization thereof is not restricted. In addition, an expansion of negative electrode is caused and current collectivity is deteriorated, so that the cycle property is degraded.

As is explained above, in a case where silicon of which crystal structure is a face-centered cubic structure is used as a negative electrode material, even if its average particle diameter is small, a particle is pulverized by expansion and contraction thereof associated with charging/discharging. On the other hand, in a case where tin having a tetragonal structure is used, a particle is pulverized by expansion and contraction thereof associated with charging/discharging and an expansion of negative electrode is caused. As a result, in a case where silicon or tin is used as the negative electrode material, current collectivity of inside of battery is deteriorated, battery capacity is decreased and charge/discharge cycle characteristics are greatly deteriorated as compared with a negative electrode material of graphite.

### SUMMARY OF THE INVENTION

It is an object of the present invention, in a non-aqueous electrolyte secondary battery comprising a positive electrode containing a positive electrode active material, a negative electrode containing the negative electrode active material and a non-aqueous electrolyte, to improve the negative electrode active material of negative electrode and attain a high capacity, high energy density and excellent charge/discharge cycle characteristics.

According to the present invention, in the non-aqueous electrolyte secondary battery provided with the positive electrode comprising the positive electrode active material, the negative electrode comprising the negative electrode active material and the non-aqueous electrolyte, amixturewhereinat least onemetal selected from zinc and cadmium having an average particle diameter of 0.25 µm or more to 100 µm or less is mixed with carbon is used as the negative electrode active material.

A fabrication method for fabricating a non-aqueous electrolyte secondary battery providing a positive electrode, a negative electrode, and a non-aqueous electrolyte according to the present invention comprises the steps of : making negative electrode composite slurry by mixing zinc, carbon and a binding agent in an aprotic polar solvent; and preparing the negative electrode by applying the negative electrode composite slurry to a negative electrode current collector.

In the non-aqueous electrolyte secondary battery of the present invention, the mixture wherein at least one metal selected from zinc and cadmium having the average particle diameter of from 0.25 µm to 100 µm is mixed with carbon is used as the negative electrode active material. As a result, pulverization of the metal caused by expansion and contraction thereof associated with charging/discharging is more restricted than the case of using silicon and the like, and a decrease of current collectivity of negative electrode caused by expansion and contraction of the metal is restrained the same as in the case of using the metal singly.

Further, in a case where the negative electrode composite using the metal and carbon is filled at high density, a gap is partially formed between a metal particle and a carbon particle by expansion and contraction associated with charging/discharging, so that perviousness of the non-aqueous electrolyte is improved.

Consequently, in the present invention, the non-aqueous electrolyte secondary battery with high capacity, high energy density and excellent charging/discharging characteristics is obtained.

Particularly, in a case where zinc is used as the metal, safety is ensured, and working potential of the negative electrode is lowered. As a result, high battery voltage is attained, and the non-aqueous electrolyte secondary battery wi th higher capacity and higher energy density is obtained.

Further, in a case where a graphite material is used as carbon, the non-aqueous electrolyte secondary battery with further higher capacity and further higher energy density is obtained. Also, a difference in working potential between the graphite material and zinc is small, and these materials suitably function as the negative electrode active material. As a result, charging/discharging is properly conducted and charging/discharging cycle characteristics are more improved.

Still further, in the fabrication method of the non-aqueous electrolyte secondary battery according to the present invention, the negative electrode composite slurry is made by mixing zinc, carbon and the binding agent in the aprotic polar solvent. As a result, the negative electrode composite slurry is prevented from forming an agglomerate, and the positive electrode comprising zinc, carbon and the binding agent is suitably prepared.

These and other objects, advantages and features of the invention will become apparent from the following description thereof taken in conjunction with the accompanying drawings which illustrate specific embodiments of the invention.

### BRIEF DESCRIPTION OF THE DRAWINGS

Fig.1 is a SEM image showing 10000-times enlarged particle of zinc used in Examples of the invention;
Fig.2 is a schematic view illustrating a text cell fabricated in Examples and Comparative Examples of the invention;
Fig.3 is a SEM image showing 1000-times enlarged state of a surface of negative electrode fabricated in Example 3 of the invention;
Fig.4 is a SEM image of 5000-times enlarged state of the surface of negative electrode fabricated in Example 3 of the invention;
Fig.5 is a graph showing an initial discharge curve measured by using a test cell of Example 1;
Fig.6 is a graph showing an initial discharge curve measured by using a test cell of Example 2;
Fig.7 is a graph showing an initial discharge curve measured by using a test cell of Example 3;
Fig.8 is a graph showing an initial discharge curve measured by using a test cell of Example 4;
Fig.9 is a graph showing an initial discharge curve measured by using a test cell of Example 5;
Fig.10 is a graph showing an initial discharge curve measured by using a test cell of Comparative Example 1;
Fig.11 is a graph showing an initial discharge curve measured by using a test cell of Comparative Example 2;
Fig.12 is a graph showing an initial discharge curve measured by using a test cell of Comparative Example 3;
Fig. 13 is a graph showing an initial discharge curve measured by using a test cell of Comparative Example 4;
Fig. 14 is a graph showing an initial discharge curve measured by using a test cell of Comparative Example 5;
Fig. 15 is a graph showing an initial discharge curve measured by using a test cell of Comparative Example 6;
Fig. 16 is an optical microscope photograph of 25-times enlarged state of a surface of the negative electrode fabricated in Example 6 of the invention;
Fig.17 is an optical microscope photograph of 25-times enlarged state of a surface of the negative electrode fabricated in Comparative Example 8 of the invention;
Fig.18 is a graph showing an initial discharge curve measured by using a test cell of Example 7;
Fig.19 is a graph showing an initial discharge curve measured by using a test cell of Comparative Example 10;
Fig.20 is a graph showing an initial discharge curve measured by using a test cell of Example 8; and
Fig.21 is a graph showing an initial discharge curve measured by using a test cell of Comparative Example 11.

### DESCRIPTION OF THE PREFERRED EMBODIMENTS

In a non-aqueous electrolyte secondary battery providing with positive electrode comprising a positive electrode active material, a negative electrode comprising a negative electrode active material, and a non-aqueous electrolyte, embodiments of a non-aqueous electrolyte secondary battery according to the invention using a mixture wherein at least one metal selected from zinc and cadmium having an average particle diameter of 0.25 µm or more to 100 µm or less is mixed with a carbon as the negative electrode active material will be specifically described.

Each of zinc and cadmium has a large specific gravity, and therefore, a weight reduction in lithium ion battery is not attained by the use of zinc and cadmium as the negative electrode active material. On the other hand, inviewof capacity density per unit volume, although 2923 mAh/cm³ of zinc and 6187 mAh/cm³ of cadmium are smaller than 9781 mAh/cm³ of silicon and 5762 mAh/cm³ of tin, which are larger than 837 mAh/cm³ of graphite of a conventional negative electrode active material.

In view of crystal structure, each of cadmium, zinc and magnesium among an element forming an alloy with lithium such as carbon, tin, silicon, magnesium, aluminum, calcium, zinc, cadmium and silver has a hexagonal close packed crystal structure the same as a hydrogen-absorbing alloy which has been generally used in a nickel hydrogen battery. Therefore, each of cadmium, zinc and magnesium has a high capacity, and expansion and contraction thereof associated with charging/discharging is more restricted than silicon or tin. As to Si and Sn, in forming an alloy with lithium, a volume expansion ratio calculated from crystal lattice constant is 4.83 in forming Si₅Li₂₂, and the volume expansion ratio calculated from crystal lattice constant is 3.78 in forming Sn₄Li₂₂, and both of them are large. On the other hand, as to Zn, the volume expansion ratio calculated from crystal lattice constant is only 1.98 in forming ZnLi.

Among the metals forming the hexagonal crystal structure, magnesium reacts easily with water or oxygen and an alloy composition with lithium is Li_{0.3}Mg and has little advantage in capacity density as compared with LiC₆ of graphite. On the other hand, each of zinc and cadmium forms LiZn and Li₃Cd as an alloy with lithium wherein the ratio of lithium is at maximum, and therefore, it is conceived that capacity density thereof is higher than that of graphite. Since each aluminum and calcium has a face-centered cubic structure the same as silicon, silver has a hexagonal structure and tin has a tetragonal structure, it is conceived that expansion and contraction in volume thereof associated with charging/discharging is large the same as silicon.

Further, it may be effective to previously form an alloy of zinc and cadmium with lithium for the purpose of restricting volume expansion thereof. As to zinc, in addition to LiZn, Li_{0.4}Zn, Li_{0.5}Zn and Li_{0.67}Zn have been known as its alloy. Particularly, Li_{0.4}Zn has been known as being stable. As to cadmium, LiCd, Li_{0.2}Cd, and Li_{0.3}Cd have been known as its alloy.

As to at least one metal selected from zinc and cadmium having higher ionization than hydrogen, in a case where its average particle diameter is small as nano-metallic fine particle, a production of the metal becomes difficult. Particularly, as to zinc, specific surface area thereof becomes large as described above, the surface is easily oxidized, and the metal is deactivated, so that sufficient battery property is not obtained. On the other hand, in a case where averageparticle diameter is too large, whenmakingnegative electrode composite slurry, the metal is sunk and is not dispersed uniformly, and the above-described effect by mixing the metal and carbon is not obtained. Therefore, in the present invention, as the above-described metal, a metal having an average particle diameter in a range of from 0.25 µm or more to 100 µm or less may be used. Furthermore, a metal having an average particle diameter in the range of from 0.5 µm to 15 µm may preferably be used.

In a case where zinc is used as the metal, since zinc has higher ionization than hydrogen and easily forms zinc oxide by reacting with moisture of atmosphere, there is a fear that an utilizing rate of zinc as the negative electrode active material is lowered. Therefore, it may be preferable that the surface of zinc is covered with an element having lower ionization than hydrogen. Particularly, in order to improve the utilizing rate and surface conductivity of zinc, the surface of zinc may be preferably coated with copper having low electric resistance. Examples of methods coating zinc surface with such an element include sinter ing method, rapid quenching method, metal plating method, sputtering method, rolling method, sol-gel method and deposition method, however, the method is not limited to these examples.

However, even if zinc or cadmium is used as the negative electrode active material, decrease of current collectivity by expansion and contraction is not fully restricted. Therefore, it may be necessary to mix zinc or cadmium with carbon, especially graphite, for the purpose of obtaining sufficient charge/discharge characteristics.

As to using a mixture of graphite with zinc, as compared with the use of zinc singly, the following effects may be obtained: 1) current collectivity of negative electrode is more improved, and 2) elimination of conductive agent by expansion and contraction of zinc associated with charging/discharging is restricted. As compared with the use of graphite singly, the use of mixture of graphite with zinc may obtain the following effect: 1) a gap between a particle of graphite and a particle of zinc is ensured even under high filling density and perviousness of the electrolyte is improved, so that charge/discharge characteristics which have been a problem to be solved in a conventional graphite electrode may be improved.

Here, it may be preferable that graphite to be used has a particle diameter of 1 µm to 30 µm because graphite is used as active material, not only the conductive agent. The reason thereof is as follows. In a case where the particle diameter is small and the specific surface area is large, although conductivity is improved, charge/discharge efficiency is deteriorated and function as the active material is degraded. Examples of usable graphite include artificial graphite and natural graphite in combination or alone. Particularly, artificial graphite may preferably be used.

Examples of usable carbon include graphite, petroleum coke, coal coke, carbide of petroleum pitch, carbide of coal pitch, phenolic plastic, carbide of crystalline cellulose resin and the like and carbon carbonaizing one part thereof, furnace black, acetylene black, pitch system carbon fiber, and PAN system carbon fiber. In view of conductivity and capacity density, graphite may preferably be used.

Here, the above described graphite has a lattice constant of 0.337 nm or less. Since such graphite has higher crystallinity as compared with coke or carbide, conductivity and capacity density are high and working potential is low, and therefore, such graphite may preferably be used.

Further, in a case where graphite is used as carbon, when its particle diameter is large, a contact between the above-described metal is decreased and conductivity in the negative electrode is deteriorated. On the other hand, when its particle diameter is too small, a deactivated site is increased as well as the specific surface area thereof is increased, and charge/discharge efficiency is decreased. Therefore, it may be preferable that graphite having a particle diameter of 0.1 µm to 30 µm is used. Moreover, graphite having a particle diameter of 1 µm to 30 µm may preferably be used.

Further, in a case where a mixture of zinc and graphite is used as the negative electrode active material, the difference in working potential therebetween is small, and each of zinc and graphite properly functions as the negative electrode active material. As a result, a proper charging/discharging may be conducted.

In a case where a mixture of zinc and carbon is used as the negative electrode active material, when an amount of zinc in the negative electrode active material is insufficient, volume capacity density in the negative electrode is not fully improved. On the other hand, when the amount of zinc is excessive, the contact between zinc and carbon is deteriorated and conductivity in the negative electrode is lowered by expansion and contraction of zinc associated with charging/discharging, so that sufficient charging/discharging cycle characteristics are not obtained. Therefore, the amount of zinc in the negative electrode active material may be set to be within the range of from 5 to 60 mass %, preferably, 10 to 50 mass %, more preferably, 30 to 50 mass %.

In a case where the negative electrode composite using the above metal and carbon is filled at a high density of not less than 1.8 g/cm³, a gap is partially formed between the metal and the carbon by expansion and contraction of the metal associated with charging/discharging. As a result, perviousness of the non-aqueous electrolyte is improved and decrease of charging/discharging characteristics is prevented. Further, it may be preferable to mechanically mix the metal such as zinc and cadmium with carbon by using an agitation device such as mortar, ball mill, Mechanofusion, and jet mill.

Here, it may be preferable that the metal element to be mixed with carbon such as graphite is not hard and has 3.0 or less of Mohs hardness. The reason is as follows. Inmixing the metal and graphite, when the metal is hard, graphite is pulverized and discharge capacity is decreased. Because zinc has 2.5 of Mohs hardness and cadmium has 2.0 of Mohs hardness, it may be preferable to use zinc or cadmium as such a metal. On the other hand, it may be not preferable to use silicon as such a metal, because silicon has 7.0 of Mohs hardness.

It may be preferable to produce the metal to be mixed with carbon by an atomizing method. The production by atomizing method has the following effects. Since a particle size is easily controlled, the produced metal is easily dispersed in a negative electrode composite layer and a pulverization step is unnecessary. Further, it may be more preferable to produce the metal by a gas atomizing method using inert gas. A particle produced by the gas atomizing method is characterized in that generation of zinc oxide is restricted and its shape is globular shape. Thereby, a specific surface area per unit volume is decreased and the metal is more uniformly dispersed inside of matrix of carbon. Consequently, a stress inside of negative electrode generated by a difference between the mixed graphite in expansion and contraction associated with charging/discharging is relaxed, and a structure of negative electrode is stably maintained even if charging/discharging is repeated, so that cycle life characteristics are improved.

In the non-aqueous electrolyte secondary battery according to the present invention, any known non-aqueous electrolyte used in a conventional non-aqueous electrolyte secondary battery may be used as the non-aqueous electrolyte. Examples of such a non-aqueous electrolyte include a non-aqueous electrolyte dissolving a solute in a non-aqueous solvent, and gel type polymer electrolyte wherein the non-aqueous electrolyte is impregnate into a polymer electrolyte such as polyethylene oxide and polyacrylonitrile.

As the non-aqueous solvent, any known non-aqueous solvent used in a conventional non-aqueous electrolyte secondary battery may be used. Examples of usable non-aqueous solvent include cyclic carbonate and chained carbonate. Examples of cyclic carbonate include ethylene carbonate, propylene carbonate, butylene carbonate, vinylene carbonate and fluorine derivative thereof. Particularly, it may be preferable to use ethylene carbonate or fluoro ethylene carbonate. Examples of chained carbonate include dimethyl carbonate, methyl ethyl carbonate, diethyl carbonate and fluorine derivative thereof such as methyl 2,2,2- trifluoroethyl and methyl-3,3,3-trifluoropropionate. Further, a mixed solvent mixing two type of the non-aqueous solvent may be used. Particularly, a mixed solvent of cyclic carbonate and chained carbonate may preferably be used. Specifically, in a case where the negative electrode wherein the filling density of negative electrode composite is high is used, a mixed solvent wherein a mixed ratio of cyclic carbonate is 35 volume % or less may preferably be used for the purpose of improving perviousness into the negative electrode. Further, a mixed solvent wherein the cyclic carbonate and an ether solvent such as 1,2-dimethoxyethane and 1,2-diethoxyethane is mixed may preferably be used.

As the solute, any known solute used in a conventional non-aqueous electrolyte secondary battery may be used. Examples of usable solute include LiPF₆, LiBF₄, LiCF₃SO₃, LiN(CF₃SO₂)₂, LiN(C₂F₅SO₂)₂, LiN(CF₃SO₂) (C₄F₉SO₂), LiC(CF₃SO₂)₃, LiC(C₂F₅SO₂)₃, LiClO₄, Li₂B₁₀Cl₁₀, and Li₂B₁₂Cl₁₂, which may be used either alone or in combination.

As the positive electrode active material of positive electrode, any known positive electrode active material used in a conventional non-aqueous electrolyte secondary battery may be used. Examples of usable positive electrode active material include lithium-cobalt composite oxide such as LiCoO₂, lithium-nickel composite oxide such as LiNiO₂, lithium-manganese composite oxide such as LiMn₂O₄ or LiMnO₂, lithium-nickel-cobalt composite oxide such as LiNi₁₋ₓCoₓO₂, lithium-manganese-cobalt composite oxide such as LiMn₁₋ₓCoₓO₂, lithium-nickel-cobalt-manganese composite oxide such as LiNiₓCo_{y}Mn_{z}O₂ wherein x+y+z=1, lithium-nickel-cobalt-aluminum composite oxide such as LiNiₓCo_{y}Al_{z}O₂ wherein x+y+z=1, Li-containing transition metal oxide, manganese dioxide such as MnO₂, polyphosphoric oxide such as LiFePO₄ and LiMPO₄ wherein M is a metal element, and metal oxide such as vanadium oxide V₂O₅, another oxide and sulfide.

In order to increase capacity density of battery in combination with the negative electrode, lithium-cobalt composite oxide containing cobalt having a high working potential such as lithium cobaltate LiCoO₂, lithium-nickel-cobalt composite oxide, lithium-nickel-cobalt-manganese composite oxide, and lithium-manganese-cobalt composite oxide may preferably be used either alone or in combination. Further, in order to obtain a battery with further higher capacity, lithium-nickel-cobalt composite oxide and lithium-nickel-cobalt-manganese composite oxide may more preferably be used.

Further, a kind of material of positive electrode current collector of positive electrode is not particularly limited if it is a material having conductivity. Examples of usable material include aluminum, stainless and titanium. Further, as a conductive material, for example, acetylene black, graphite and carbon black may be used. Asabindingagent, for example, polyvinylidenefluoride, polytetrafluoroethylene, EPDM, SBR, NBR, and fluorine rubber may be used.

Next, embodiments of a fabrication method of non-aqueous electrolyte secondary battery according to the invention comprising the steps of mixing zinc, carbon and a binding agent in an aprotic polar solvent to prepare negative electrode composite slurry and applying the negative electrode composite slurry to a negative electrode current collector to prepare a negative electrode will be specifically described.

Here, in a fabrication method of negative electrode using graphite of carbon material, a method for preparing slurry by mixing graphite, carboxymethylcellose sodium salt (CMC) and styrene-butadiene rubber (SBR) in water of dispersion medium has been conventionally used.

However, in a case where the mixture of zinc and graphite of carbon material, CMC, SBR and water of dispersion medium were mixed to prepare slurry, an agglomerate generated from aggregation of slurry is found. The reason of this is thought to be as follows. Because zinc is an amphoteric element the same as aluminum and has higher ionization tendency, when zinc is mixed with slurry containing water of dispersion medium, zinc acid ion is generated by reaction and elution of zinc as well as hydrogen is generated, and pH of slurry is raised. As a result, slurry may be aggregated and flocculated.

Therefore, in the fabrication method of non-aqueous electrolyte secondary battery according to the present invention, in order to restrict elution of zinc and aggregation of slurry, an aprotic polar solvent which does not react with zinc and not emit hydrogen may be used as dispersion medium.

In a step of preparing the negative electrode composite slurry, carbon, a binding agent, and zinc covered with aprotic polar solvent may be mixed. In such a case, since zinc is covered with aprotic polar solvent, even if water is used as the dispersion medium, zinc does not contact with water. As a result, elution of zinc into water is restricted.

Examples of effective aprotic polar solvent include N- methyl pyrrolidone (NMP), dimethyl sulfoxide (DMSO), and dimethyl acetamide (DMA). Particularly, NMP may suitably be used. Because NMP has a molecular weight of 99.13 which is bigger than molecular weight of water 18.0, the aggregation and sedimentation of slurry is restricted. Further, NMP has a high boiling point of 204 °C and is stable. Therefore, it may be suitable to use NMP as the dispersion medium in mixing zinc and graphite of carbon material. In a case where NMP is used as the dispersion medium of slurry, since NMP is a high boiling point solvent, it remains in the range of from 5 to 500 ppm after fabrication of negative electrode.

Hereinbelow, a non-aqueous electrolyte secondary battery according to examples of the invention is specifically described, and it will be demonstrated by the comparison with comparative examples that the non-aqueous electrolyte secondary battery with high capacity, high energy density and excellent charge/discharge cycle characteristics is obtained. It should be construed, however, that the non-aqueous electrolyte secondary battery according to the invention is not limited to those illustrated in the following examples, and various changes and modifications may be made unless such changes and modifications depart from the scope of the invention.

### (Example 1)

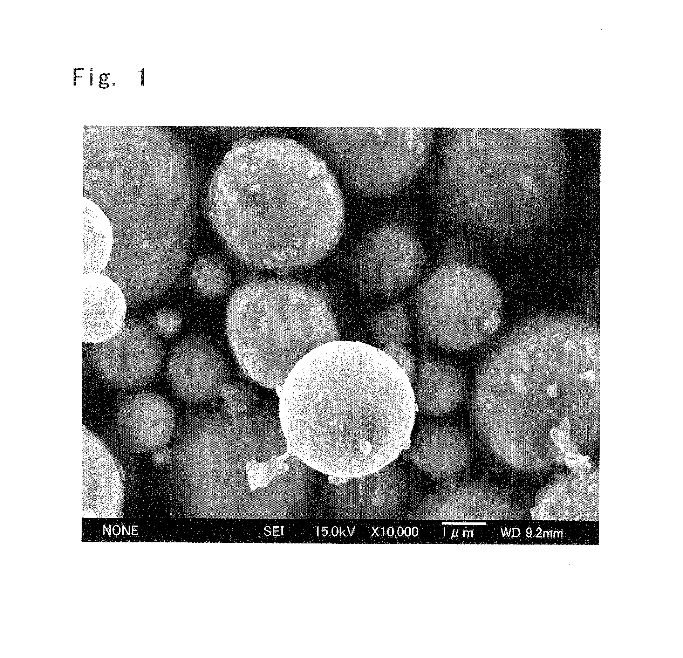

A non-aqueous electrolyte secondary battery of Example 1 utilized a negative electrode active material containing a first active material and a second active material. As the first active material, zinc of globular shape having an average particle diameter 4.5 µm which was produced by atomizing method (item number 000-87575, high quality, made by KISHIDA CHEMICAL Co. , Ltd. See Fig.1) was used. As the second active material, artificial graphite having 22 µm of average particle diameter and 0.3362 nm of crystal lattice constant was used. Each of average particle diameters of zinc and artificial graphite was measured by SALAD-2000 made by SHIMADZU CORPORATION.

The first active material and the second active material were mixed together in a mass ratio of 5:95 by using a ball mill. In mixing by the ball mill, 10 pieces of ball made by SUS having 12.5 mm diameter and 8.5 g were used and mixture was continued for 30 seconds at 200 rpm and was stopped for 30 seconds. This operation was repeated 60 times.

Next, polyvinylidene fluoride of binding agent and NMP of dispersion medium were added to the resultant negative electrode active material wherein the first active material and the second active material were mixed so that a mass ratio of the negative electrode active material and the binding agent was 90:10. Then, these materials were kneaded to prepare negative electrode composite slurry.

After that, the negative electrode composite slurry was applied on a negative electrode current collector made of copper foil and dried at 80 °C. Then, the resultant material was rolled by a roller and a current collector tab was installed thereto. Thus, a negative electrode used in Example 1 was fabricated.

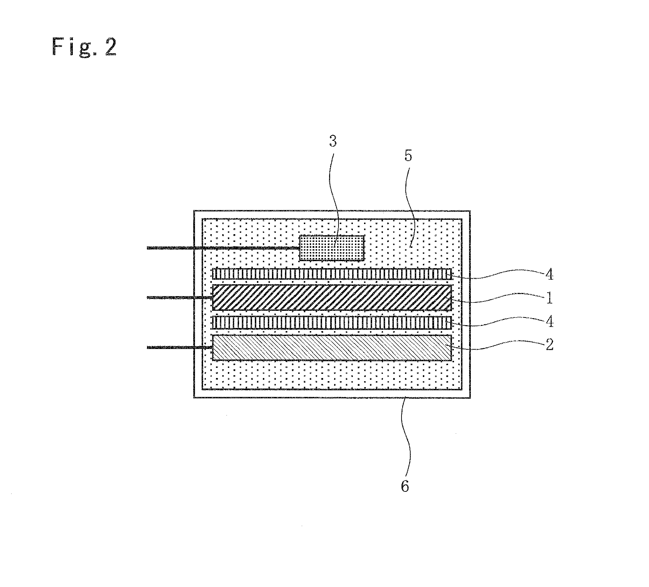

Then, a test cell shown in Fig. 2 was fabricated using the negative electrode prepared above.

A non-aqueous electrolyte in the test cell was prepared as follows. A mixture solvent was prepared by mixing ethylene carbonate and ethyl methyl carbonate at a volume ratio of 3:7. Then, lithium hexafluorophosphate LiPF₆ was dissolved in the resultant solvent in a concentration of 1.0 mol/l to give the non-aqueous electrolyte.

Next, in a glove box under an argon atmosphere, the negative electrode fabricated above was used as a working electrode 1 and lithium metal was used as a counter electrode 2 and a reference electrode 3. Then, separator 4 of polyethylene was interposed between the working electrode 1 and the counter electrode 2 and between the working electrode 1 and the reference electrode 3. After that, these are sealed together with the non-aqueous electrolyte 5 in a laminated container 6 composed of aluminum laminate to fabricate a test cell of Example 1.

### (Example 2)

In Example 2, in preparation of the negative electrode active material of negative electrode of Example 1, the mixing ratio of the first active material consisting of zinc and the second active material consisting of artificial graphite was changed to 10:90. The negative electrode active material prepared as above was used to fabricate a negative electrode of Example 2. Except for the use of such a negative electrode, the same procedure as in Example 1 was used to fabricate a test cell of Example 2.

### (Example 3)

In Example 3, in preparation of the negative electrode active material of Example 1, the mixing ratio of the first active material consisting of zinc and the second active material consisting of artificial graphite was changed to 30:70. The negative electrode active material prepared as above was used to fabricate a negative electrode of Example 3. Except for the use of such a negative electrode, the same procedure as in Example 1 was used to fabricate a test cell of Example 3.

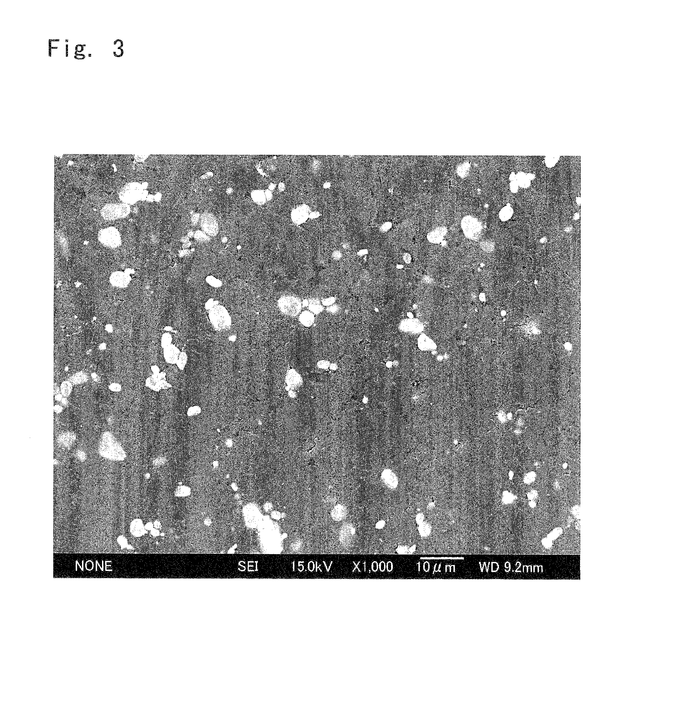

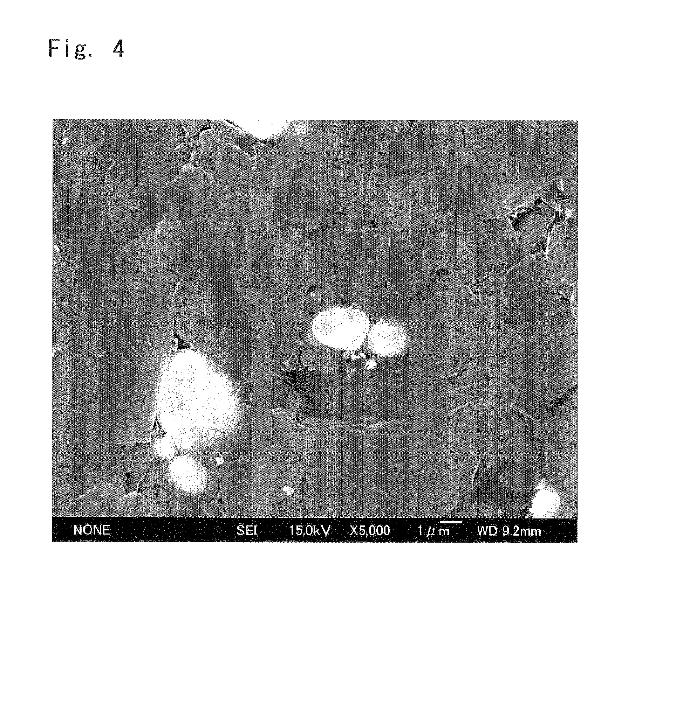

Further, the surface of negative electrode of Example 3 was observed by scanning transmission electron microscope (SEM). Next, a SEM image enlarging the negative electrode surface 1000 times and a SEM image enlarging the negative electrode surface 5000 times are shown in Fig. 3 and Fig.4. As seen from Fig.3, the first active material of zinc is dispersed in the second active material of artificial graphite. As seen from Fig.4, a gap is partially formed in a contact part between the first active material of zinc and the second active material of artificial graphite. It is conceived that the non-aqueous electrolyte is permeated into the inside of negative electrode through the gap.

### (Example 4)

In Example 4, in preparation of the negative electrode active material of Example 1, the mixing ratio of the first active material consisting of zinc and the second active material consisting of artificial graphite was changed to 50:50. The negative electrode active material prepared as above was used to fabricate a negative electrode of Example 4. Except for the use of such a negative electrode, the same procedure as in Example 1 was used to fabricate a test cell of Example 4.

### (Example 5)

In Example 5, in preparation of the negative electrode active material of Example 1, the mixing ratio of the first active material consisting of zinc and the second active material consisting of artificial graphite was changed to 60:40. The negative electrode active material prepared as above was used to fabricate a negative electrode of Example 5. Except for the use of such a negative electrode, the same procedure as in Example 1 was used to fabricate a test cell of Example 5.

### (Comparative Example 1)

In Comparative Example 1, in preparation of the negative electrode active material of Example 1, the first active material consisting of zinc was not used. Only the second active material consisting of artificial graphite was used to fabricate a negative electrode of Comparative Example 1. Except for the use of such a negative electrode, the same procedure as in Example 1 was used to fabricate a test cell of Comparative Example 1.

### (Comparative Example 2)

In Comparative Example 2, in preparation of the negative electrode active material of Example 1, the mixing ratio of the first active material consisting of zinc and the second active material consisting of artificial graphite was changed to 70:30. The negative electrode active material prepared as above was used to fabricate a negative electrode of Comparative Example 2. Except for the use of such a negative electrode, the same procedure as in Example 1 was used to fabricate a test cell of Comparative Example 2.

### (Comparative Example 3)

In Comparative Example 3, in preparation of the negative electrode active material of Example 1, only the first active material consisting of zinc was used to fabricate a negative electrode and the second active material consisting of artificial graphite was not used. Except for the use of such a negative electrode, the same procedure as in Example 1 was used to fabricate a test cell of Comparative Example 3.

### (Comparative Example 4)

In Comparative Example 4, in preparation of the negative electrode active material of Example 1, instead of zinc, silicon was used as the first active material, and the mixing ratio of the first active material consisting of silicon and the second active material consisting of artificial graphite was 20:80. The negative electrode active material prepared as above was used to fabricate a negative electrode of Comparative Example 4. Except for the use of such a negative electrode, the same procedure as in Example 1. was used to fabricate a test cell of Comparative Example 4.

### (Comparative Example 5)

In Comparative Example 5, in preparation of the negative electrode active material of Example 1, instead of zinc, silicon was used as the first active material, and the mixing ratio of the first active material consisting of silicon and the second active material consisting of artificial graphite was changed to 50:50. The negative electrode active material prepared as above was used to fabricate a negative electrode of Comparative Example 5. Except for the use of such a negative electrode, the same procedure as in Example 1 was used to fabricate a test cell of Comparative Example 5.

### (Comparative Example 6)

In Comparative Example 6, in preparation of the negative electrode active material of Example 1, instead of artificial graphite, copper was used as the second active material, and the mixing ratio of the first active material consisting of zinc and the second active material consisting of copper was 65:35. The negative electrode active material prepared as above was used to fabricate a negative electrode of Comparative Example 6. Except for the use of such a negative electrode, the same procedure as in Example 1 was used to fabricate a test cell of Comparative Example 6.

Next, under room temperature environment, each test cell of Examples 1 to 5 and Comparative Examples 1 to 6 was charged at a constant current of 0.2 mA/cm² until electric potential reached 0 V(vs.Li/Li⁺). Further, each test cell was discharged at the constant current of 0.2 mA/cm² until the electric potential reached 1.0 V (vs. Li/Li⁺). This charging and discharging was defined as one cycle. As to each test cell, an initial discharge capacity and initial average working potential at a first cycle were measured. Further, the charging and discharging was repeated and a discharge capacity at fourth cycle of each test cell was measured. The results are shown in Table 1 below.

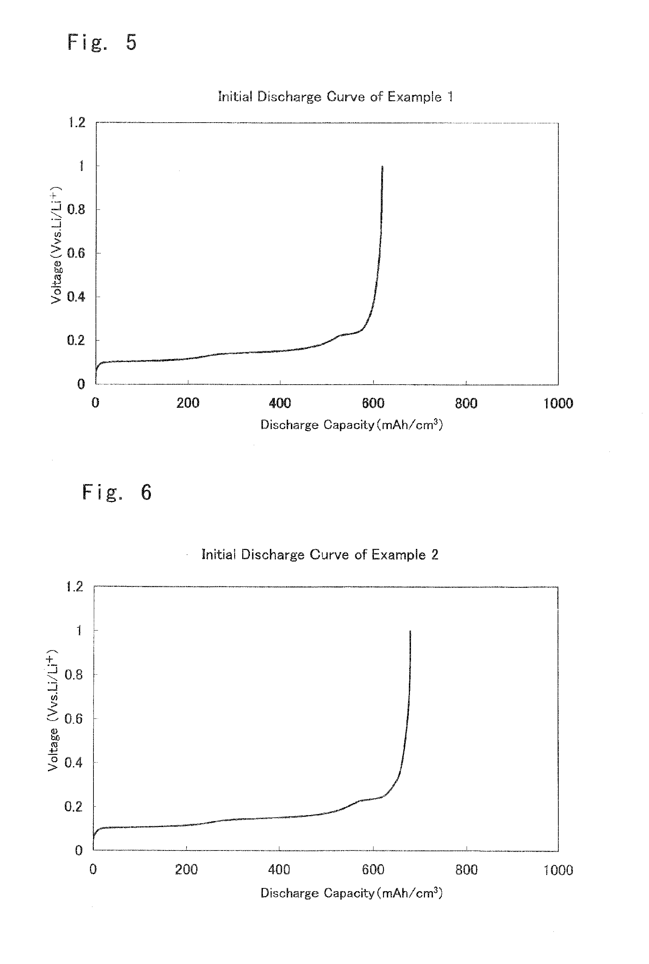

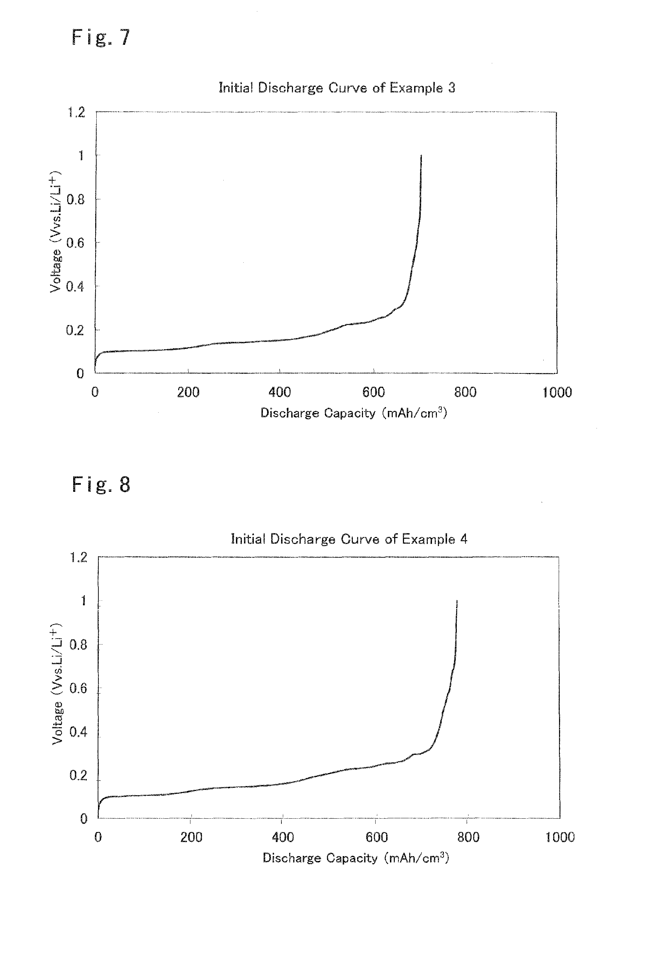

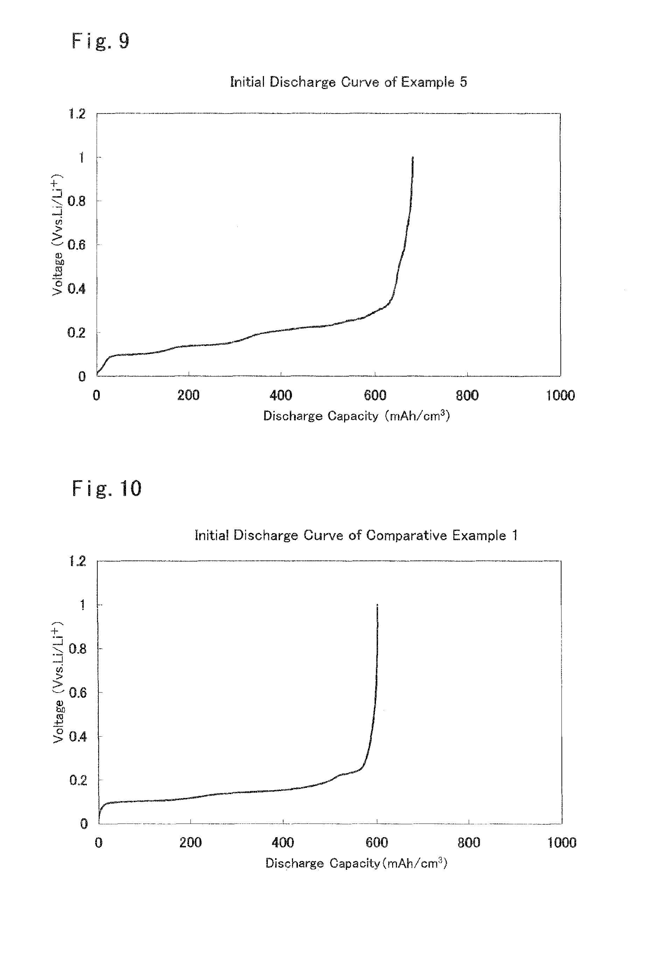

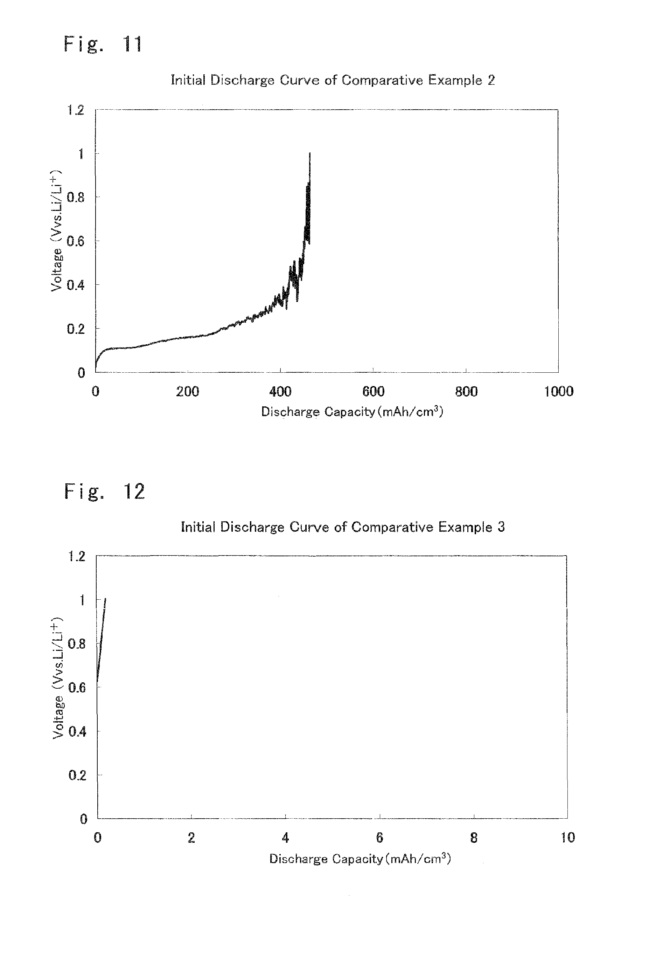

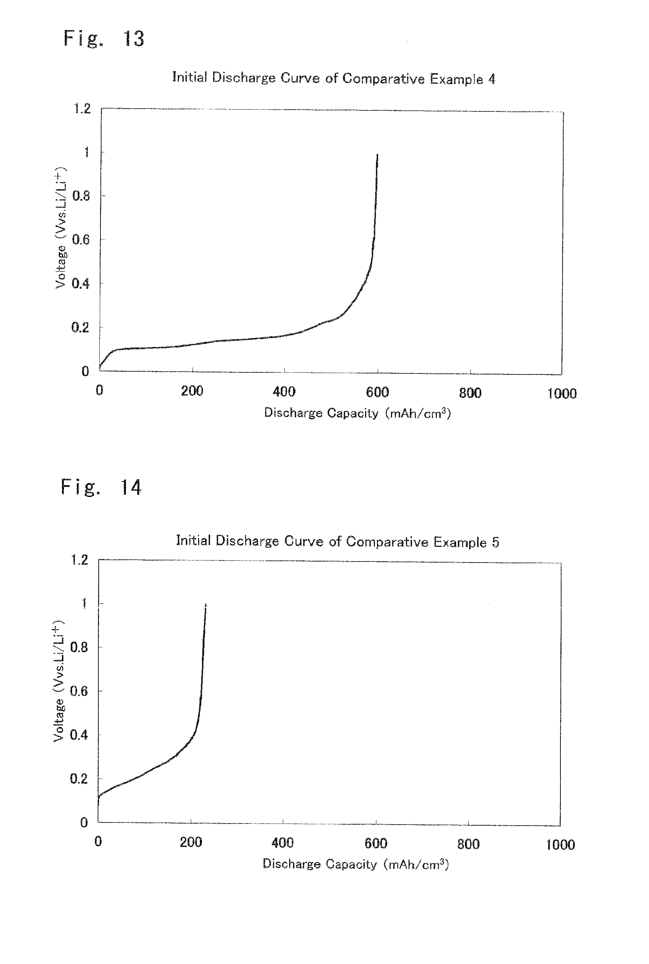

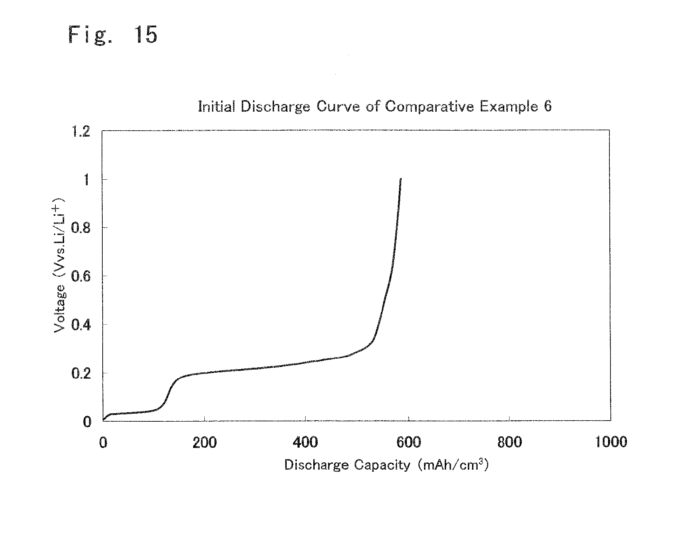

Further, as to each test cell, an initial discharge curve at first cycle was measured. The results of Examples 1, 2, 3, 4 and 5 were shown in Fig.5, 6, 7, 8 and 9 respectively. Further, the results of Comparative Examples 1, 2, 3, 4, 5 and 6 were shown in Fig.10, 11, 12, 13, 14 and 15 respectively.

**TABLE 1**

| | Negative electrode active material (mass ratio) | | Initial discharge capacity (mAh/cm³) | Initial average working potential (V vs Li/Li⁺) | Discharge capacity at fourth cycle (mAh/cm³) |
|---|---|---|---|---|---|
| | Fist active material | Second active material | | | |
| Example 1 | Zn (5) | Artificial graphite (95) | 618.9 | 0.163 | 639.5 |
| Example 2 | Zn (10) | Artificial graphite (90) | 723.3 | 0.159 | 727.3 |
| Example 3 | Zn (30) | Artificial graphite (70) | 906.8 | 0.178 | 882.7 |
| Example 4 | Zn (50) | Artificial graphite (50) | 839.8 | 0.198 | 672.1 |
| Example 5 | zn (60) | Artificial graphite (40) | 682.7 | 0.205 | 443.1 |
| Comparative Example 1 | - | Artificial graphite (100) | 603.1 | 0.159 | 626.4 |
| Comparative Example 2 | Zn (70) | Artificial graphite (30) | 464.5 | 0.215 | 116.4 |
| Comparative Example 3 | Zn (100) | - | 0.2 | 1.003 | 0.3 |
| Comparative Example 4 | Si (20) | Artificial graphite (80) | 596.1 | 0.178 | 528.0 |
| Comparative Example 5 | Si (50) | Artificial graphite (50) | 230.8 | 0.276 | 5.3 |
| Comparative Example 6 | Zn (65) | Cu(35) | 585.6 | 0.228 | 10.7 |

According to the results, each test cell of Examples 1 to 5 utilizing the negative electrode active material wherein the mixing ratio of the first active material of zinc and the second active material of artificial graphite was in the range of from 5:95 to 60:40 (namely, the mass ratio of zinc in the negative electrode active material is 5 to 60 mass %) exhibited higher initial discharge capacity than that of the test cell of Comparative Example 1 wherein only the second active material of artificial graphite was used as the negative electrode active material. Further, as compared with each test cell of Comparative Examples 2 to 6, the initial discharge capacity was more improved in each test cell of Examples 1 to 5. In accordance with the results, it is found that a high capacity density was obtained in each test cell of Examples 1 to 5. In addition, it is found that when the mass ratio of zinc in the negative electrode active material was 10 to 60 mass %, especially 30 to 50 mass %, the initial discharge capacity was particularly high.

The initial average working potential of each cell of Examples 1 to 5 was almost same as that of Comparative Example 1 using only the second active material of artificial graphite as the negative electrode active material. Further, the initial average working potential of test cell of Example 4 wherein 50 mass % of zinc was mixed with artificial graphite was lower and preferable as compared with the initial average working potential of test cell of Comparative Example 5 wherein 50 mass % of silicon was mixed with artificial graphite.

Further, each test cell of Examples 1 to 4 utilizing the negative electrode active material wherein the mass ratio of zinc was 5 to 50 mass % exhibited higher discharge capacity at fourth cycle than that of the test cell of Comparative Example 1 wherein only the second active material of artificial graphite was used as the negative electrode active material. Further, as compared with each test cell of Comparative Examples 2 to 6, the discharge capacity at fourth cycle of each test cell of Examples 1 to 4 was remarkably higher, and it is found that charge/discharge characteristics were excellent.

Consequently, in a case where the negative electrode active material in negative electrode employs the mixture of the first active material of zinc and the second active material of artificial graphite, in order to improve capacity density further, a preferable mass ratio of zinc in the negative electrode active material may be in the range of from 10 to 50 mass %, more preferably, 30 to 50 mass %. In addition, it is found that, in order to improve charge/discharge cycle characteristics further, a preferable mass ratio of zinc in the negative electrode active material may be in the range of from 10 to 50 mass %.

### (Example 6)

In Example 6, a negative electrode was fabricated as the same as Example 2.

### (Comparative Example 7)

In Comparative Example 7, a negative electrode was fabricated as the same as Comparative Example 1.

### (Comparative Example 8)

In Comparative Example 8, the same as Example 2, the negative electrode active material wherein the first active material and the second active material were mixed in the mass ratio of 10:90 was used. On the other hand, water was used as the dispersion medium. The negative electrode active material, styrene-butadiene rubber as the binding agent, CMC as a viscosity improver and water as the dispersion medium were mixed so that the mass ratio of the negative electrode active material, the binding agent, and the viscosity improver was 97.5:1.5:1.0. Then, the resultant material was kneaded to prepare negative electrode composite slurry. Thus, a negative electrode of Comparative Example 8 was fabricated using the negative electrode composite slurry prepared as above.

### (Comparative Example 9)

In Comparative Example 9, in preparation of the negative electrode of Comparative Example 8, only the second active material was used as the negative electrode active material. Except for the above, the same procedure as in Comparative Example 8 was used to fabricate a negative electrode of Comparative Example 9.

Next, as to each negative electrode of Example 6 and Comparative examples 7 to 9, the number of agglomerate generated on the surface of negative electrode was counted as the number of electrode trace. An electrode trace having a diameter of 1 mm or more was considered as a large electrode trace and an electrode trace having a diameter of less than 1mm was considered as small electrode trace. Then, each electrode trace around 10 cm² of each negative electrode was counted. The results were shown in Table 2.

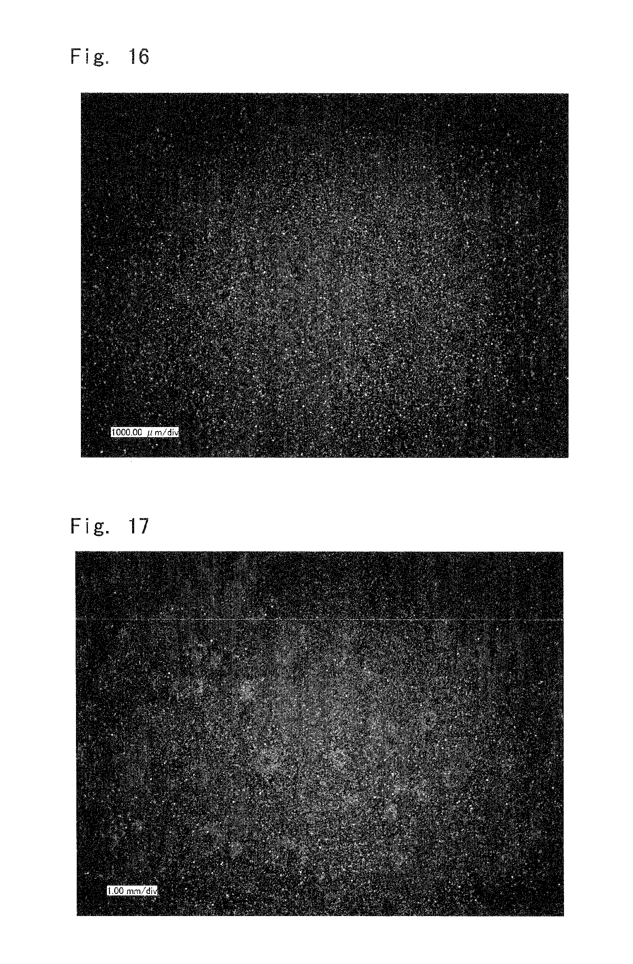

Further, the surface of each negative electrode of Example 6 and Comparative Example 8 was observed by a microscope. The results of Example 6 and Comparative Example 8 were shown in Fig. 16 and Fig. 17 respectively.

Next, a current collector tub was installed on each negative electrode of Example 6 and Comparative Examples 7 to 9 and each test cell was fabricated the same as Example 1.

Then, under room temperature environment, each test cell of Example 6 and Comparative Examples 7 to 9 was charged at a constant current of 0.2 mA/cm² until electric potential reached 0 V (vs. Li/Li⁺). Further, each test cell was discharged at the constant current of 0.2 mA/cm² until the electric potential reached 1.0 V (vs. Li/Li⁺). This charging and discharging was defined as one cycle. As to each test cell, an initial discharge capacity at a first cycle was measured. The results are shown in Table 2 below.

**TABLE 2**

| | Negative electrode active material (mass ratio) | | Dispersion medium of slurry | Number of large electrode trace (number/10cm²) | Number of small electrode trace (number/10cm²) | Initial Discharge capacity (mAh/cm³) |
|---|---|---|---|---|---|---|
| | Fist active material | Second active material | | | | |
| Example 6 | Zn (10) | Artificial graphite (90) | NMP | 0 | 1 | 647.7 |
| Comparative Example 7 | - | Artificial graphite (100) | NMP | 0 | 1 | 565.7 |
| Comparative Example 8 | Zn (10) | Artificial graphite (90) | Water | > 100 | > 100 | 612.0 |
| Comparative Example 9 | - | Artificial graphite (100) | Water | 0 | 0 | 610.4 |

As seen from Fig. 16 and Fig. 17, in the negative electrode of Comparative Example 8 employingwater as the dispersionmedium of the negative electrode composite slurry, the large number of electrode trace on the surface resulting from agglomerate of slurry was found. On the other hand, in the negative electrode of Example 6 employing NMP as the dispersion medium of the negative electrode composite slurry, generation of such agglomerate was restricted, and therefore, an uniform electrode may be obtained. Further, as seen from Table 2, the test cell of Example 6 using the negative electrode wherein agglomerate was restricted had a high discharge capacity.

In Comparative Examples 7 and 9 using only artificial graphite as the negative electrode active material, whether water or NMP was used as the dispersion medium, there were few electrode traces found. Therefore, it is conceived that the agglomerate of slurry causing electrode trace was resulting from mixing of zinc.

### (Example 7)

In Example 7, in preparation of the negative electrode active material for negative electrode of Example 4, the second activematerial was changed to natural graphite having an average particle diameter of 3.5 µm and a crystal lattice constant of 0.3356 nm. Except for the use of such a negative electrode, the same procedure as in Example 1 was used to fabricate a test cell of Example 7.

### (Comparative Example 10)

In Comparative Example 10, in preparation of the negative electrode active material for negative electrode of Example 7, the first active material was not used and the second active material of the above-described natural graphite was used. Except for the use of such a negative electrode, the same procedure as in Example 1 was used to fabricate a test cell of Comparative Example 10.

Then, under room temperature environment, each test cell of Example 7 and Comparative Example 10 was charged at a constant current of 0.2 mA/cm² until electric potential reached 0 V (vs. Li/Li⁺). Further, each test cell was discharged at the constant current of 0.2 mA/cm² until the electric potential reached 1.0 V (vs. Li/Li⁺). This charging and discharging was defined as one cycle. As to each test cell, an initial discharge capacity and an initial average working potential at a first cycle were measured. Further, the charging and discharging was repeated and a discharge capacity at fourth cycle of each test cell was measured. The results are shown together with the result of test cell of Example 4 in Table 3 below.

**TABLE 3**

| | Negative electrode active material (mass ratio) | | Initial discharge capacity (mAh/cm³) | Initial average working potential (V vs Li/Li⁺) | Discharge capacity at fourth cycle (mAh/cm³) |
|---|---|---|---|---|---|
| | Fist active material | Second active material | | | |
| Example 7 | Zn (50) | Natural graphite (50) | 594.7 | 0.261 | 630.8 |
| Comparative Example 10 | - | Natural graphite (100) | 112.5 | 0.316 | 62.8 |
| Example 4 | Zn (50) | Artificial graphite (50) | 839.8 | 0.198 | 672.1 |

| | | | | | |
|---|---|---|---|---|---|
| * Average particle diameter of artificial graphite: 22 µm * Average particle diameter of natural graphite : 3.5 µm | | | | | |

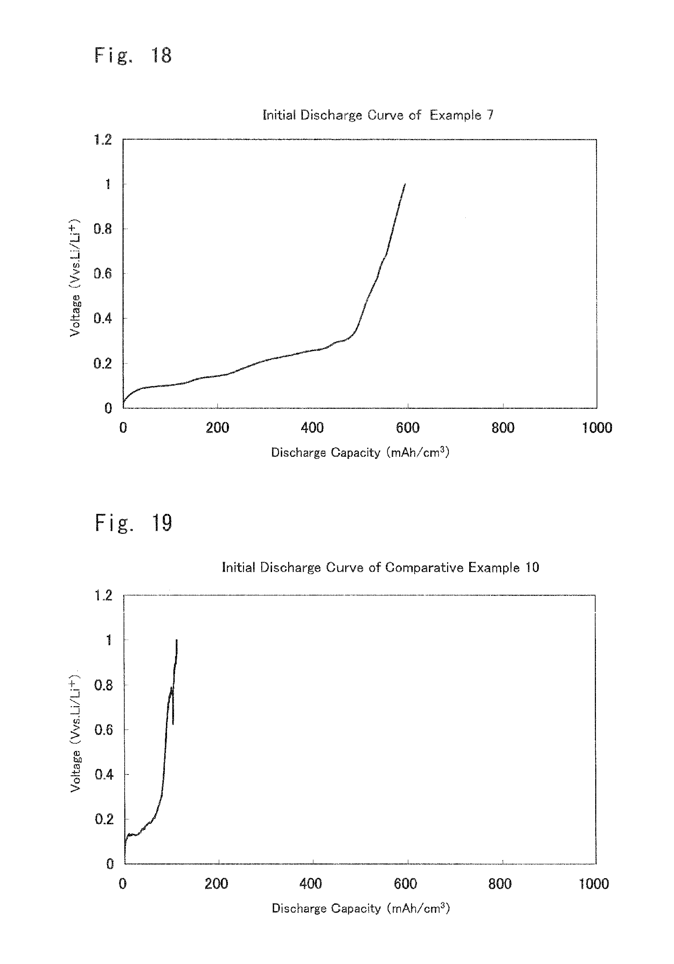

Further, as to each test cell of Example 7 and Comparative Example 10, an initial discharge curve at first cycle was measured. The results of Example 7 and Comparative Example 10 were shown in Fig.18 and Fig. 19 respectively.

According to the results, the test cell of Example 7 using the negative electrode wherein the first active material of zinc and the second active material of natural graphite were mixed exhibited further improvement in both of initial discharge capacity and the discharge capacity at fourth cycle as compared with the test cell of Comparative Example 3 using the first active material of zinc only and the test cell of Comparative Example 10 using the second active material of natural graphite only. Further, in the test cell of Example 7, the value of the initial average working potential was lower than that of the test cell of Comparative Example 10 and was preferable. However, in comparison with the test cell of Example 4, the test cell of Example 7 was inferior in the initial discharge capacity and the discharge capacity at fourth cycle.

According to the results, in a case where the mixture of the first active material of zinc and the second active material of carbon was used, the particle diameter of carbon of the second active material may be preferably not less than 5 µm.

### (Example 8)

In Example 8, zinc of globular shape having the average particle diameter 4.5 µm which was produced by atomizing method (item number 000-87575, high quality, made by KISHIDA CHEMICAL Co., Ltd. See Fig.1) was used as the first active material the same as Example 1. On the other hand, artificial graphite having average particle diameter of 23 µm and crystal lattice constant of 0.3362 nm was used as a second active material. Then, as the same as Example 3, the mass ratio of mixing the first active material and the second active material was 30:70 to prepare a negative electrode of Example 8. Except for the use of such a negative electrode, the same procedure as in Example 1 was used to fabricate a test cell of Example 8.

### (Comparative Example 11)

In Comparative Example 1.1, zinc of globular shape having small particle diameter (item number 578002, particular diameter < 50 nm made by Sigma-Aldrich Corporation) was used as a first active material for fabrication of a negative electrode of Comparative Example 11. Except for the use of such a negative electrode, the same procedure as in Example 1 was used to fabricate a test cell of Comparative Example 11.

Then, under room temperature environment, each test cell of Example 8 and Comparative Example 11 was charged at a constant current of 0.75 mA/cm² until electric potential reached 0 V (vs. Li/Li⁺) and further charged at a constant current of 0.25 mA/cm² until the electric potential reached 0 V (vs. Li/Li⁺). Furthermore, each test cell was charged at a constant current of 0.10 mA/cm² until electric potential reached 0 V (vs. Li/Li⁺). After that, each test cell was discharged at the constant current of 0.25 mA/cm² until the electric potential reached 1.0 V (vs. Li/Li⁺). This charging and dischargingwas defined as one cycle. As to each test cell, an initial discharge capacity and an initial average working potential at a first cycle were measured. Further, the charging and discharging was repeated and a discharge capacity at tenth cycle of each test cell was measured. The results are shown in Table 4 below.

**TABLE 4**

| | Negative electrode active material (mass ratio) | | Initial discharge capacity (mAh/cm³) | Initial average working potential (V vs Li/Li⁺) | Discharge capacity at tenth cycle (mAh/cm³) |
|---|---|---|---|---|---|
| | Fist active material | Second active material | | | |
| Example 8 | Zn (30) | Artificial graphite (70) | 668.8 | 0.199 | 615.2 |
| Comparative Example 11 | Zn of small particle diameter (30) | Artificial graphite (70) | 767.2 | 0.224 | 534.2 |

| | | | | | |
|---|---|---|---|---|---|
| * Average particle diameter of Zn: 4.5 µm * Average particle diameter of Zn of small particle diameter: less than 0.05 µm | | | | | |

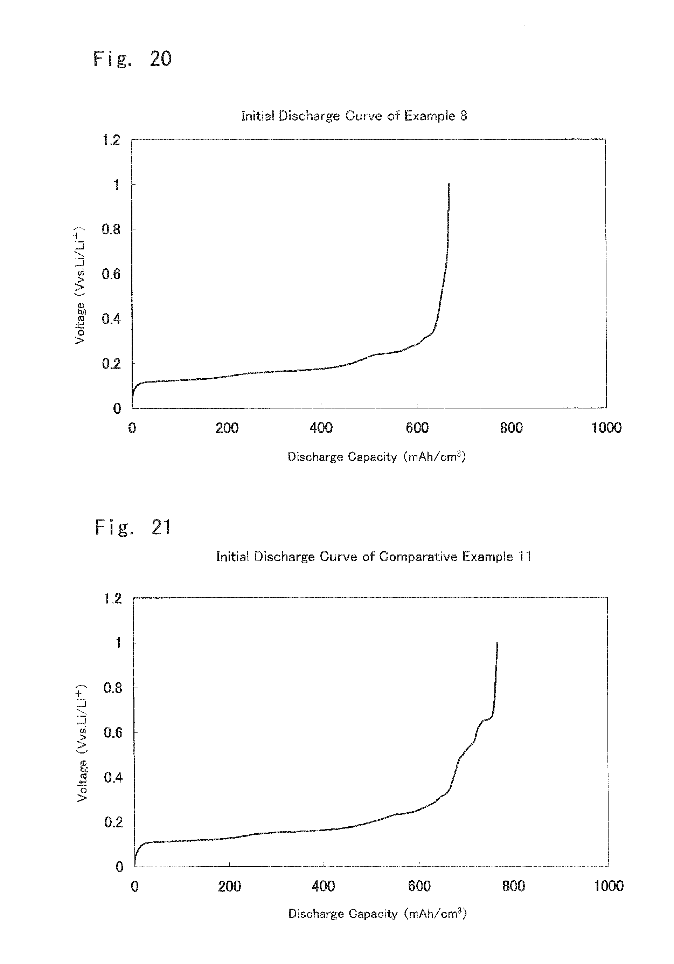

Further, as to each test cell of Example 8 and Comparative Example 11, an initial discharge curve at first cycle was measured. The results of Example 8 and Comparative Example 11 were shown in Fig.20 and Fig.21 respectively.

According to the results, the test cell of Example 8 using the negative electrode active material wherein the first active material of zinc having the average particle diameter of 4.5 µm and the second active material of artificial graphite were mixed exhibited further improvement in the discharge capacity at tenth cycle as compared with the test cell of Comparative Example 11 using the negative electrode active material wherein the first active material of zinc having the average particle diameter of less than 50 nm (0.05 µm) and the second active material of artificial graphite were mixed.

Further, in the test cell of Example 8, the value of the initial average working potential was lower than that of the test cell of Comparative Example 11 and was preferable.

The reason is thought to be as follows. In the negative electrode of Comparative Example 11, the particle diameter of zinc as the first active material was small and therefore its surface area was enlarged and an amount of oxidization film on the surface of zinc was increased, so that cycle characteristics were deteriorated.

As a result, in a case where a negative electrode active material wherein a first active material of zinc and a second active material of artificial graphite were mixed is used in a negative electrode, it is found that zinc having an average particle diameter of 0.25µm or more may be preferably used as the first active material.

## Claims

1. A non-aqueous electrolyte secondary battery, comprising:
a positive electrode comprising a positive electrode active material;
a negative electrode comprising a negative electrode active material;
and a non-aqueous electrolyte;
wherein a mixture of at least one metal selected from zinc and cadmium having an average particle diameter in a range of from 0.25 µm to 100 µm and carbon is used as the negative electrode active material.

2. The non-aqueous electrolyte secondary battery as claimed in Claim 1,
wherein a mixture of at least one metal selected from zinc and cadmium having an average particle diameter in a range of from 0.5 µm to 15 µm and carbon is used as the negative electrode active material.

3. The non-aqueous electrolyte secondary battery as claimed in Claim 1 or 2,
wherein a mixture of zinc and carbon is used as the negative electrode active material and a mixing ratio of zinc in the negative electrode active material is 5 to 60 mass %.

4. The non-aqueous electrolyte secondary battery as claimed in Claim 3,
wherein the mixing ratio of zinc in the negative electrode active material is 10 to 50 mass %.

5. The non-aqueous electrolyte secondary battery as claimed in Claim 4,
wherein the mixing ratio of zinc in the negative electrode active material is 30 to 50 mass %.

6. The non-aqueous electrolyte secondary battery as claimed in any one of Claims 1 to 5,
wherein the carbon in the negative electrode active material is graphite.

7. The non-aqueous electrolyte secondary battery as claimed in any one of Claims 1 to 6,
wherein the metal is produced by an atomizing method.

8. The non-aqueous electrolyte secondary battery as claimed in any one of Claims 1 to 7,
wherein the carbon has a particle diameter in a range of from 5 µm to 30 µm.

9. A fabrication method for a non-aqueous electrolyte secondary battery comprising a positive electrode, a negative electrode, and a non-aqueous electrolyte comprising the steps of:
mixing zinc, carbon and a binding agent in an aprotic polar solvent to prepare negative electrode composite slurry; and
applying the negative electrode composite slurry to a negative electrode current collector to prepare a negative electrode.

10. A fabrication method for a non-aqueous electrolyte secondary battery comprising a positive electrode, a negative electrode, and a non-aqueous electrolyte comprising the steps of:
mixing carbon, a binding agent, and zinc which is covered with an aprotic polar solvent to prepare negative electrode composite slurry; and
applying the negative electrode composite slurry to a negative electrode current collector to prepare a negative electrode.

11. The fabrication method for the non-aqueous electrolyte secondary battery as claimed in claim 9,
wherein the aprotic polar solvent is N-methyl pyrrolidone.

12. The fabrication method for the non-aqueous electrolyte secondary battery as claimed in claim 10,
wherein the aprotic polar solvent is N-methyl pyrrolidone.
